# EUROPÄISCHE PATENTSCHRIFT

(11) **EP 0 713 636 B1**
(45) Veröffentlichungstag und Bekanntmachung des Hinweises auf die Patenterteilung: **14.08.2002**
(21) Anmeldenummer: 95118344.1
(22) Anmeldetag: 22.11.1995
(51) Int. Cl.: A01B 35/16, A01B 35/28

(54) **Landwirtschaftliche Bodenbearbeitungsmaschine**
Agricultural soil working machine
Machine agricole pour le travail du sol

(30) Priorität: 25.11.1994 DE 9418722 U
(43) Veröffentlichungstag der Anmeldung: 29.05.1996
(73) Patentinhaber: Maschinenfabrik Rau GmbH, 73235 Weilheim (DE)
(72) Erfinder: Rau, Willy, D-73230 Kirchheim-Teck (DE)
(74) Vertreter: Manitz, Finsterwald & Partner GbR

(56) Entgegenhaltungen:
- AU-A- 7 256 187
- DE-C- 159 487
- FR-A- 2 281 706
- FR-A- 2 619 667
- GB-A- 434 811
- US-A- 1 911 623
- US-A- 1 950 851
- US-A- 2 617 343
- US-A- 3 542 139
- US-A- 4 241 793

## Beschreibung

Die Erfindung betrifft eine landwirtschaftliche Bodenbearbeitungsmaschine mit einem mit einem Zugfahrzeug koppelbaren Rahmen und wenigstens zwei in Fahrtrichtung hintereinander angeordneten, quer zur Fahrtrichtung ausgerichteten, passiv rotierenden und durch Zinkeneingriff in den Boden arbeitenden Zinkenwalzen, welche miteinander kämmend an Wippen drehbar gelagert sind, die ihrerseits am Rahmen um eine quer zur Fahrtrichtung verlaufende Achse schwenkbar angeordnet sind, so daß bei Schwenkung einer Wippe jeweils eine der Zinkenwalzen aufwärts und eine Zinkenwalze abwärts bewegt wird.

Eine derartige Bodenbearbeitungsmaschine ist aus der FR-A 2 619 667 bekannt. Nach dieser Druckschrift sind an den Wippen zwei Zinkenwalzen hintereinander angeordnet, wobei die hintere Zinkenwalze in Fahrtrichtung bzw. Längsrichtung der Wippen verstellt werden kann, um den Abstand der beiden Walzen in Fahrtrichtung einzustellen.

Im übrigen besitzen die Zinkenwalzen zylindrisch ausgebildete Achskörper, die spießartige Zinken mit relativ geringen Querschnitten tragen. Die freien Zinkenenden sind jeweils gegenüber einem achskörperseitigen Zinkenteil etwas abgewinkelt, so daß die freien Enden bei der durch Vorwärtsfahrt vorgegebenen Drehrichtung der Walzen jeweils etwas in Drehrichtung weisen.

Aus der US-A 2 617 343 ist eine weitere Bodenbearbeitungsmaschine bekannt, welche mit mehreren Walzenaggregaten ausgerüstet ist. Diese umfassen jeweils ein Walzenpaar mit zwei hintereinander angeordneten Walzen, wobei jedem Walzenpaar ein stabiler Rahmen zur Drehlagerung der Walzen zugeordnet ist.

Aufgabe der Erfindung ist es nun, eine Bodenbearbeitungsmaschine zu schaffen, die eine besonders wirksame Zerkleinerung von Erdbrocken sowie eine gute Einebnung und Durcharbeitung der oberen Bodenschicht gewährleistet.

Diese Aufgabe wird bei einer Bodenbearbeitungsmaschine der eingangs angegebenen Art dadurch gelöst, daß die Lager der Zinkenwalzen an den Wippen Taumelbewegungen der Zinkenwalzen ermöglichen, derart, daß die Wippe auf einer Maschinenseite in eine Richtung und die Wippe auf der anderen Maschinenseite in entgegengesetzter Richtung schwenken und die Zinkenwalzen sich bei Ansicht in Fahrtrichtung gegeneinander verschränken können.

Die Erfindung beruht auf dem allgemeinen Gedanken, den Walzen neben einer Höhenbeweglichkeit auch eine Taumelbeweglichkeit zu ermöglichen, so daß sich jede Walze auch dann gut an den Untergrund anschmiegen kann, wenn relativ zu Ebene des Rahmens ein wechselndes Seitwärtsgefälle quer zur Fahrrichtung auftritt. Damit können die Zinken der Walzen auf der gesamten Walzenbreite weitestgehend gleichartig in den Boden eindringen, so daß ein besonders gleichförmiges Arbeitsergebnis gewährleistet ist.

Vorzugsweise ist vorgesehen, daß die Zinkenwalzen einen Achskörper und eine Mehrzahl von an der Außenfläche des Achskörpers befestigten Zinken aufweisen, deren Längsachse außerhalb des Umfangs des Achskörpers verläuft und deren freie Enden in der durch die Fahrtrichtung vorgegebenen Drehrichtung der Zinkenwalze relativ zur jeweiligen Befestigungsstelle einer Zinke am Achskörper nachlaufend angeordnet sind. Bei dieser Anordnung können die Zinken gut in den Boden eindringen, wobei gleichzeitig gewährleistet wird, daß die Bodenbearbeitungsmaschine durch die jeweils auf der, Bodenoberfläche aufliegenden Außenflächen der Zinken getragen wird, so daß einerseits der Boden von den Zinken umgebrochen und andererseits auch verfestigt wird.

Bei einer vorteilhaften Ausführungsform ist vorgesehen, unmittelbar vor der vorderen Zinkenwalze Grubber oder Werkzeuge mit ähnlicher Schälwirkung anzuordnen, um den Boden vor den Zinkenwalzen aufzulockern, wobei die hierbei entstehenden relativ groben Bodenschollen durch die nachfolgenden Zinkenwalzen zerkleinert und eingeebnet werden.

Als besonders vorteilhaft hat sich erwiesen, unmittelbar hinter der hinteren Zinkenwalze Grubber oder andere Werkzeuge mit ähnlicher Schälwirkung anzuordnen. Da derartige Bodenbearbeitungswerkzeuge das erfaßte Erdreich zu einem großen Anteil nach oben und in Fahrtrichtung der Bodenbearbeitungsmaschine nach vorne werfen, kann erreicht werden, daß auch von den Grubbern hinter den Zinkenwalzen erfaßtes Erdreich von oben in den Wirkungsbereich der Zinkenwalzen geworfen und unter Zerkleinerung der Erdbrocken eingeebnet wird.

In Kombination mit dicht vor den Zinkenwalzen angeordneten Grubbern ergibt sich dann eine Bodenbearbeitungsmaschine, die bei geringer Baulänge einerseits den Boden bis in tiefere Bereiche lockern und wenden kann und andererseits eine besonders wirksame Zerkleinerung von Erdbrocken und dergleichen bei guter Einebnung und Durcharbeitung der oberen Bodenschicht gewährleistet.

Gemäß einer bevorzugten Ausführungsform sind die Achskörper im wesentlichen zylindrisch ausgebildet und die Zinken tangential zur Außenfläche des Achskörpers gelegen. Alternativ ist es aber auch möglich, Achskörper mit einem vieleckigen, insbesondere einem quadratischen, Querschnitt zu verwenden und die Zinken flächig an den Seitenflächen des Achskörpers anliegend an dem Achskörper anzuschweißen. Hierdurch läßt sich eine hohe Festigkeit und Stabilität der Anordnung erzielen.

In vorteilhafter Weise bilden die im wesentlichen in einer vertikalen Ebene gelegenen Zinken einer Zinkenwalze einen geschlossenen Rahmen bzw. sind zu einem geschlossenen Rahmen verbunden, wobei die an dem dem freien Ende abgewandten Ende jedes Zinkens ausgebildete Stirnfläche des Zinkens an der dem Achskörper zugewandten Fläche eines nachfolgenden Zinkens anliegt und mit dieser Fläche des Zinkens verbunden, vorzugsweise verschweißt, ist. Durch diese Anordnung kann die Stabilität der Zinkenwalzen noch weiter erhöht werden, da die Befestigungsstellen der Zinken an dem Achskörper von den im Betrieb wirkenden Kräften entlastet werden.

Außerdem werden durch diese Maßnahme die Flächen, mit denen die Zinken im Betrieb auf dem Boden aufliegen vergrößert, so daß die Tragfähigkeit der Maschine gesteigert wird.

Gemäß einer bevorzugten Ausführungsform laufen die Zinken an ihren freien Enden spitz zu, wobei die Spitzen jeweils auf der dem Achskörper fernen Außenfläche der Zinken liegen und vorzugsweise der Spitzenwinkel kleiner oder gleich 60°, insbesondere etwa 30°, ist.

In vorteilhafter Weise werden die Wippen durch ein Drehmoment derart beaufschlagt, daß die Vorderenden der Wippen bzw. die vordere Zinkenwalze eine Anhebetendenz und die Hinterenden der Wippen bzw. die hintere Zinkenwalze eine Absenktendenz besitzen. Hierdurch wird auch bei starkem Erdwurf von vor den Zinkenwalzen angeordneten Grubbern ein zu tiefes Eintauchen der vorderen Zinkenwalze in den Erdstrom vermieden. Vielmehr werden die Walzen ständig in Lagen gedrängt, in denen eine besonders wirksame Zerkleinerung der aufgeworfenen Erde erfolgt.

Zur Erzielung eines besonders gleichmäßigen Arbeitsbildes ist es von Vorteil, hinter den Grubbern V-förmige Leitwerkzeuge, insbesondere Leitbleche, zwischen den hinteren Grubberzinken zur Schließung der durch die Grubber erzeugten Rillen im Boden vorzusehen.

Die Wippen sind gemäß einer weiteren Ausführungsform der Erfindung über ein in vertikaler Richtung verstellbar am Rahmen gehaltenes Tragteil höhenverstellbar an dem Rahmen angebracht, wodurch die Eindringtiefe der Zinken in den Boden und damit die Bearbeitungstiefe eingestellt werden kann und außerdem die Anwendung bzw. die Tauschbarkeit der Zinkenwalzen in anderen Werkzeugfolgen ohne große Umrüstarbeiten gegeben ist.

Hinsichtlich bevorzugter Ausgestaltungen und Weiterbildungen der Erfindung wird auf die Unteransprüche sowie die nachfolgende Beschreibung von Ausführungsbeispielen der erfindungsgemäßen Bodenbearbeitungsmaschine anhand der Zeichnung verwiesen. In der Zeichnung zeigt
- Figur 1: eine Seitenansicht einer ersten Ausführungsform einer erfindungsgemäßen Bodenbearbeitungsmaschine;
- Figur 2: ein Schnittbild der Zinkenwalzen der in Figur 1 dargestellten Bodenbearbeitungsmaschine,
- Figur 3: in Seitenansicht eine unverkleidete Wippe mit zwei daran angeordneten Zinkenwalzen nach Figur 1;
- Figur 4: in Seitenansicht die Wippe nach Figur 3 mit Verkleidung,

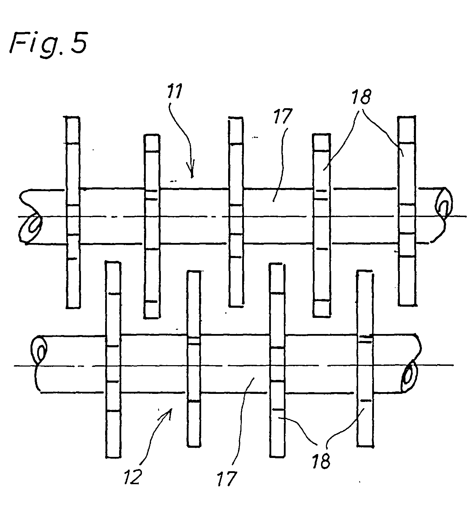

- Figur 5: eine Teildraufsicht auf die Zinkenwalzen der in Figur 1 dargestellten Bodenbearbeitungsmaschine;
- Figur 6: eine Seitenansicht einer zweiten Ausführungsform einer erfindungsgemäßen Bodenbearbeitungsmaschine;
- Figur 7: eine Teildraufsicht auf die Bearbeitungswerkzeuge der in Figur 6 dargestellten Bodenbearbeitungsmaschine,
- Figur 8: ein Schnittbild der Zinkenwalzen der in Figur 6 dargestellten Bodenbearbeitungsmaschine,
- Figur 9: in Seitenansicht eine unverkleidete Wippe mit zwei daran angeordneten Zinkenwalzen nach Figur 8; und
- Figur 10: die Wippe aus Figur 9 mit Verkleidung.

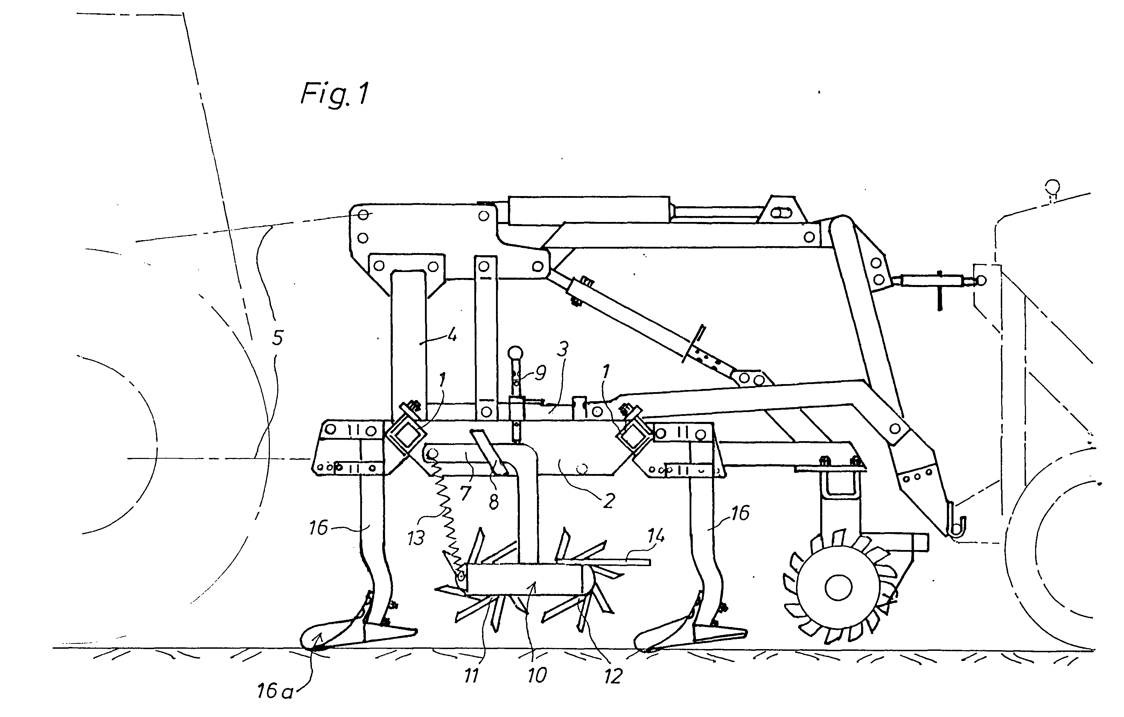

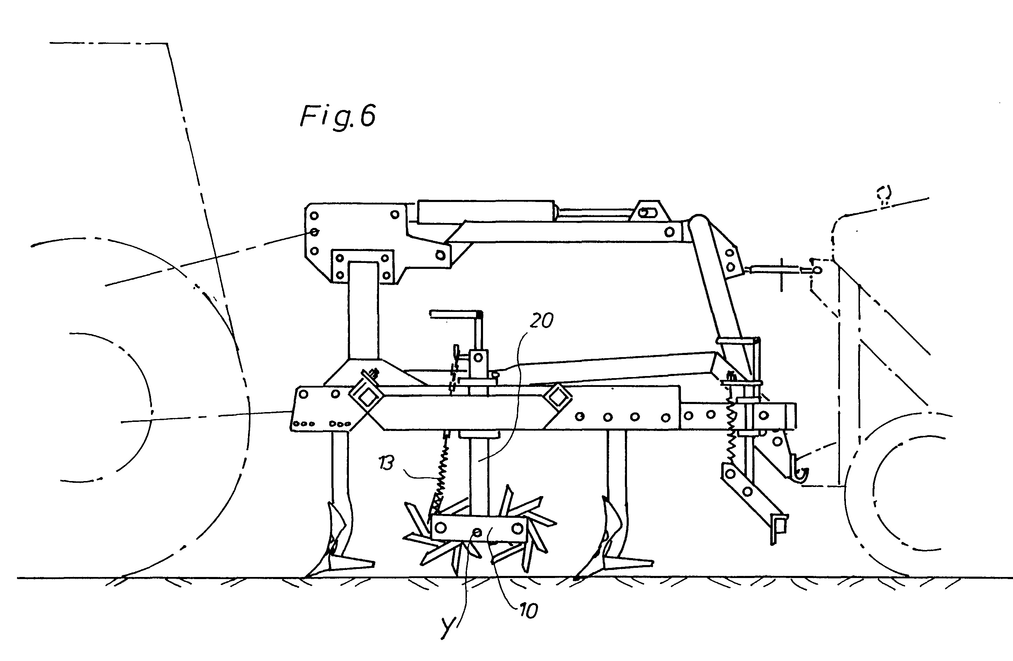

Figur 1 zeigt eine erste Ausführungsform einer erfindungsgemäßen Bodenbearbeitungsmaschine in Seitenansicht. Die Bodenbearbeitungsmaschine besitzt einen kurzen, relativ hohen Rahmen mit zwei Querholmen 1, welche an ihren Enden durch Seitenplatten 2 miteinander verbunden sind. Die Querholme 1 sind etwa in ihrer Mitte mit Längsholmen 3 eines Rahmenaggregates verbunden, welches einen bockartigen Aufbau 4 aufweist. Der Rahmen ist über Ober- und Unterlenker eines sogenannten Dreipunktgestänges 5 oder dergleichen in grundsätzlich bekannter Weise anhebbar und / oder höhenbeweglich mit einem Zugfahrzeug verbindbar. Dabei kann der Rahmen wie in Figur 1 dargestellt an ein Zugfahrzeug angehängt werden; es ist aber auch möglich, unter Verwendung der in Figur 6 dargestellten Bauelemente eine Werkzeuganordnung zu wählen, welche den Anbau frontseitig an ein Zugfahrzeug zuläßt.

Über den bockartigen Aufbau 4 bzw. das Rahmenaggregat können in grundsätzlich bekannter Weise weitere Werkzeugfolgen für die Sekundarbodenbearbeitung, z.B. eine Planierschiene, Schleppzinken und ein Striegel, mit eingebracht werden. Auch die Verwendung von nur V-förmig angeordneten, hintereinander folgenden Zinkenwalzen ist möglich.

An dem Rahmen sind zwei in Fahrtrichtung hintereinander angeordnete, quer zur Fahrtrichtung ausgerichtete, passiv rotierende und durch Zinkeneingriff in den Boden arbeitende Zinkenwalzen 11, 12 vorgesehen. Die Zinkenwalzen 11, 12 sind an einer Wippe 10 drehbar gelagert, die gegenüber dem Rahmen um eine quer zur Fahrtrichtung verlaufende Achse Y schwenkbar ist, so daß bei Schwenkung der Wippe 10 jeweils eine der an ihr gelagerten Zinkenwalzen aufwärts und eine Zinkenwalze abwärts bewegt wird.

Die Lager der Zinkenwalze 11, 12 an der Wippe 10 sind derart ausgebildet, daß Taumelbewegungen der Zinkenwalzen 11, 12 möglich sind, d.h. es besteht die Möglichkeit, das die Wippe 10 auf der einen Maschinenseite in eine Richtung und die Wippe 10 auf der anderen Maschinenseite in entgegengesetzter Richtung schwenken, so daß jede Zinkenwalze 11 bzw. 12 an einem seitlichen Ende angehoben und am anderen seitlichen Ende abgesenkt wird, wobei sich die Zinkenwalzen 11, 12 bei Ansicht in Fahrtrichtung mehr oder weniger weit gegeneinander verschränken. Durch die Verschwenkbarkeit der Wippe 10 und die taumelfähige Lagerung der Zinkenwalzen 11, 12 in der Wippe wird erreicht, daß die Zinkenwalzen 11, 12 sich im Betrieb jeweils frei gegenüber dem Rahmen bewegen können, wodurch ein zu tiefes Eintauchen der Zinken in den Erdstrom vermieden werden kann.

Durch eine Seitenverkleidung 15 werden die Lager an der Wippe 10 gegen Verschmutzungen abgeschirmt.

Die Wippe 10 ist an dem Rahmen höhenverstellbar durch zwei Winkelhebel 7 angebracht, die an ihrem einen Ende nahe des vorderen Querholmes 1 in einer vertikalen Ebene schwenkbar an den Seitenplatten 2 angeordnet sind und an ihrem vom Rahmen nach unten vorstehenden freien Ende die Wippe 10 tragen, die um die Querachse Y schwenkbar an den Winkelhebeln 7 gehalten ist.

Der im wesentlichen horizontal liegende obere Hebelteil des Winkelhebels 7 wird nahe des Übergangsbereiches zu dem im wesentlichen vertikalen unteren Hebelteil von einem an der jeweiligen Seitenplatte 2 befestigten Bügel 8 umfaßt, der den Schwenkbereich des Winkelhebels 7 gegenüber dem Rahmen nach unten hin begrenzt. Zusätzlich befindet sich an jeder Seitenplatte 2 ein höheneinstellbarer Anschlagstab 9, der den Schwenkbereich des jeweiligen Winkelhebels 7 nach oben mehr oder weniger weit einschränkt.

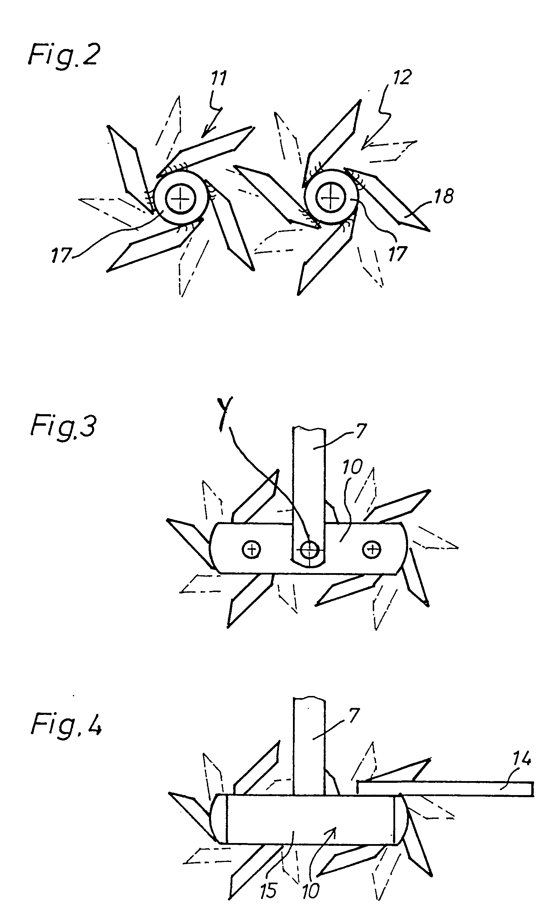

Die Zinkenwalzen 11, 12 sind weitestgehend gleichartig aufgebaut. Jedoch sind die Zinkenreihen der vorderen Zinkenwalze 11 relativ zu den Zinkenreihen der hinteren Zinkenwalze 12 quer zur Fahrtrichtung versetzt angeordnet (vgl. Fig. 2), so daß die Zinken 18 der beiden Zinkenwalzen 11, 12 kammartig ineinandergreifen und die Zinkenwalzen 11, 12 in Maschinenlängsrichtung mit vergleichsweise geringem Abstand angeordnet werden können.

Die Wippen 10 sind von einem Drehmoment beaufschlagt, durch welches die Vorderenden der Wippen 10 bzw. die vordere Zinkenwalze 11 eine Anhebetendenz und die Hinterenden der Wippe 10 bzw. die hintere Zinkenwalze 12 eine Absenktendenz besitzen. Zur Erzeugung des Drehmoments ist zwischen dem Vorderende der Wippe 10 und einem rahmenfesten Widerlager eine Schraubenzugfeder 13 gespannt, und zusätzlich ist am hinteren Ende der Wippe 10 ein Gewicht 14 angeordnet. Die Schraubenzugfeder 13 und das Gewicht 14 können auch alternativ verwendet werden.

Unmittelbar vor und hinter den Zinkenwalzen 11, 12 sind an den beiden Querholmen 1 des Rahmens Grubber 16 angeordnet, wobei die vorderen Grubber 16 vor dem vorderen Querholm 1 und die hinteren Grubber 16 hinter dem hinteren Querholm 1 angebracht sind, um trotz der kurzen Rahmenlänge einen hinreichenden Längsabstand zwischen den Grubbern 16 und insbesondere den notwendigen Abstand zwischen den Zinkenwalzen 11, 12 gewährleisten zu können.

Als Besonderheit ist bei Vorscharwerkzeugen 16a eine herzförmige Ausführung gewählt, welche eine senkrechte, als Steinschutz ausgebildete, Platte besitzt, damit eine gleichmäßige Teilung des Bodens erfolgt.

Damit der Boden hinter dem Halterungsstiel des Grubbers 16 möglichst wenig auseinandergebrochen wird, ist der Befestigungshals der herzförmigen Scharausführung sehr schmal gehalten. Dadurch wird ein sehr gleichförmiges und ebenes Gesamtarbeitsbild nach der Maschine hinterlassen. Die Anwendung von Doppelherzscharen anstelle der Vorscharwerkzeuge 16a ist möglich, wenn kein besonders ebenes und gleichförmiges Arbeitsbild erforderlich ist.

Wie die Figur 3 zeigt, besitzen die Zinkenwalzen 11, 12 einen zylindrisch ausgebildeten Achskörper 17, an dessen Außenfläche jeweils um 90° versetzt vier Zinken 18 angeschweißt sind, die tangential zur Außenfläche des Achskörpers 17 gelegen sind und deren freie Enden in der durch die Fahrtrichtung A der Bodenbearbeitungsmaschine vorgegebenen Drehrichtung der Zinkenwalze der jeweiligen Befestigungsstelle am Achskörper 17 nachlaufend gelegen sind.

Grundsätzlich kann der Achskörper 17 einen vieleckigen, insbesondere einen quadratischen Querschnitt haben, wobei dann die Zinkenwalzen 18 flächig an den Seitenflächen des Achskörpers 17 anliegen. Hierdurch kann eine besonders einfache und stabile Befestigung der Zinken 18 an dem Achskörper 17 erreicht werden.

Bei den in den Figuren 2 bis 4 dargestellten Ausführungsform bestehen die Zinken 18 aus Vierkantstäben mit quadratischem oder rechteckigem Querschnitt und sind so angeordnet, daß eine Seitenflanke des Vierkantstabes auf der Außenfläche des Achskörpers 17 aufliegt. Die Zinken 18 sind an ihren freien Enden derart schräg abgeschnitten, daß die entstehende Spitze auf der dem Achskörper 17 fernen Außenfläche der Zinken 18 liegt und der Spitzenwinkel kleiner oder gleich 60° ist, insbesondere etwa 30° beträgt.

Um die Zinken 18 verschnittfrei aus einem Materialstab herausschneiden zu können, sind auch die hinteren, achskörperseitigen Enden der Zinken 18 schräg abgeschnitten.

In Figur 6 ist eine zweite Ausführungsform einer erfindungsgemäßen Bodenbearbeitungsmaschine dargestellt. Diese Ausführungsform entspricht in ihrem Grundaufbau der in Figur 1 dargestellten Bodenbearbeitungsmaschine und unterscheidet sich von dieser im wesentlichen dadurch, daß die Wippe 10 nicht durch verschwenkbare Winkelhebel 7, sondern durch vertikal am Rahmen verstellbar geführte Tragteile 20 höhenverstellbar an dem Rahmen gehalten ist.

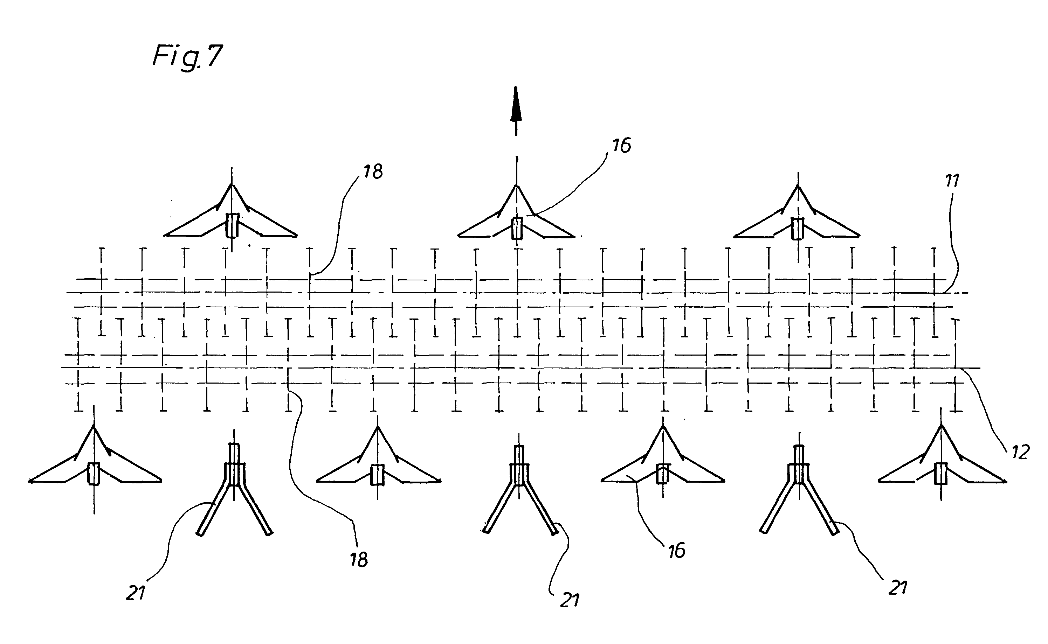

Weiterhin sind bei der zweiten Auführungsform den hinteren Grubbern 16 Leitwerkzeuge 21 nachgeschaltet, die zwischen den Grubbern 16 angeordnet sind und im Betrieb die durch die Grubber 16 erzeugten Rillen im Boden schließen (vgl. Fig. 7).

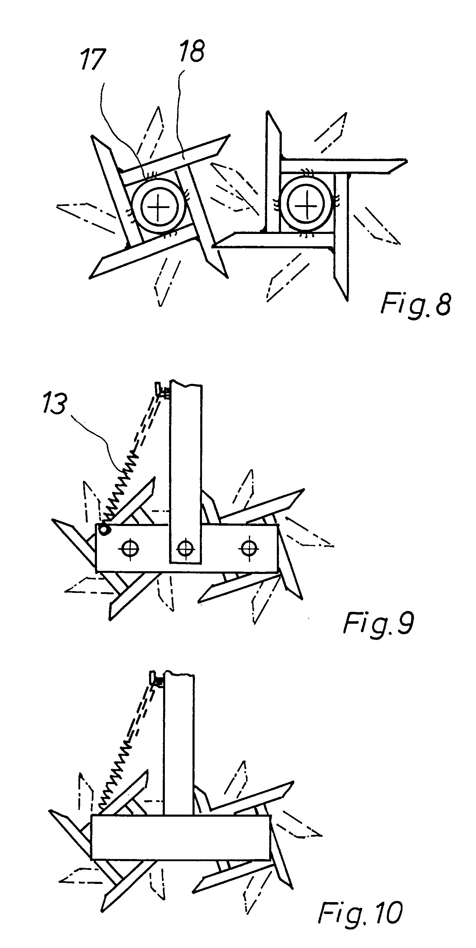

Außerdem bilden bei der zweiten Ausführungsform der erfindungsgemäßen Bodenbearbeitungsmaschine die in einer vertikalen Ebene gelegenen Zinken 18 einer Zinkenwalze 11, 12 einen geschlossenen Rahmen, wobei die an dem dem freien Ende abgewandten Enden jedes Zinkens 18 ausgebildete Stirnfläche des Zinkens 18 an der dem Achskörper 17 zugewandten Fläche eines nachfolgenden Zinkens 18 anliegt und mit dieser Fläche des Zinkens 18 verschweißt ist (vgl. Fig. 8 bis 10).

Im Betrieb werden die Zinkenwalzen 11, 12 gegenüber dem Rahmen in der Höhe verstellt, um die Bearbeitungstiefe einzustellen. Bei der Fahrt über den zu bearbeitenden Boden werden die Zinkenwalzen 11, 12 durch Bodeneingriff angetrieben. Dabei erfolgt eine wirksame Auflockerung des Bodens, indem die Zinken 18 vor einer den Boden auflockernden Schwenkbewegung zunächst einstechen, wobei der Einstich im Verlauf der Schwenkbewegung vertieft wird.

Bei der Bodenarbeit wird von den Grubbern 16 vor und hinter den Zinkenwalzen 11, 12 abgeschälte Erde von oben in die Zinkenwalzen 11, 12 geworfen und wirksam zerkleinert. Gleichzeitig erfolgt eine gute Durcharbeitung und Verdichtung der oberen Bodenschicht durch die Zinken 18.

## Patentansprüche

1. Landwirtschaftliche Bodenbearbeitungsmaschine mit einem mit einem Zugfahrzeug koppelbaren Rahmen und wenigstens zwei in Fahrtrichtung hintereinander angeordneten, quer zur Fahrtrichtung ausgerichteten, passiv rotierenden und durch Zinkeneingriff in den Boden arbeitenden Zinkenwalzen (11,12), welche miteinander kämmend an Wippen (10) drehbar gelagert sind, die ihrerseits am Rahmen um eine quer zur Fahrtrichtung verlaufende Achse schwenkbar angeordnet sind, so daß bei Schwenkung einer Wippe (10) jeweils eine der Zinkenwalzen aufwärts und eine Zinkenwalze abwärts bewegt wird,
**dadurch gekennzeichnet,**
**daß** die Lager der Zinkenwalzen (11,12) an den Wippen (10) Taumelbewegungen der Zinkenwalzen ermöglichen, derart, daß die Wippe auf einer Maschinenseite in eine Richtung und die Wippe auf der anderen Maschinenseite in entgegengesetzter Richtung schwenken und die Zinkenwalzen sich bei Ansicht in Fahrtrichtung gegeneinander verschränken können.

2. Bodenbearbeitungsmaschine nach Anspruch 1,
**dadurch gekennzeichnet,**
**daß** die Zinkenwalzen (11,12) einen Achskörper (17) und eine Mehrzahl von an der Außenfläche des Achskörpers (17) befestigten Zinken (18) aufweisen, deren Längsachse außerhalb des Umfangs des Achskörpers (17) verläuft und deren freie Enden in der durch die Fahrtrichtung vorgegebenen Drehrichtung der Zinkenwalze (11,12) der jeweiligen Befestigungsstelle am Achskörper (17) nachlaufend gelegen sind.

3. Bodenbearbeitungsmaschine nach Anspruch 2,
**dadurch gekennzeichnet,**
**daß** wenigstens einer der Achskörper (17) im wesentlichen zylindrisch ausgebildet ist und die Zinken (18) tangential zur Außenfläche des Achskörpers (17) gelegen sind.

4. Bodenbearbeitungsmaschine nach Anspruch 2,
**dadurch gekennzeichnet,**
**daß** der Querschnitt wenigstens eines der Achskörper (17) die Form eines Vielecks, insbesondere eines Quadrates, hat und die Zinken (18) flächig an den Seitenflächen des Achskörpers (17) anliegen.

5. Bodenbearbeitungsmaschine nach Anspruch 2 oder 3,
**dadurch gekennzeichnet,**
**daß** die im wesentlichen in einer vertikalen Ebene gelegenen Zinken (18) einer Zinkenwalze (11,12) einen geschlossenen Rahmen bilden bzw. zu einem geschlossenen Rahmen verbunden sind.

6. Bodenbearbeitungsmaschine nach Anspruch 5,
**dadurch gekennzeichnet,**
**daß** die an dem dem freien Ende abgewandten Ende jedes Zinkens (18) ausgebildete Stirnfläche des Zinkens (18) an der dem Achskörper (17) zugewandten Fläche eines nachfolgenden Zinkens (18) anliegt und mit dieser Fläche des Zinkens (18) verbunden, vorzugsweise verschweißt, ist.

7. Bodenbearbeitungsmaschine nach einem der Ansprüche 1 bis 6,
**dadurch gekennzeichnet,**
**daß** die Zinken (18) quadratischen Querschnitt aufweisen und mit einer Seitenfläche an der Außenfläche des jeweiligen Achskörpers (17) anliegen.

8. Bodenbearbeitungsmaschine nach einem der Ansprüche 1 bis 7,
**dadurch gekennzeichnet,**
**daß** die Zinken (18) an ihren freien Enden spitz zulaufen, wobei die Spitze auf der dem Achskörper (17) fernen Außenfläche der Zinken (18) liegt und vorzugsweise der Spitzenwinkel kleiner oder gleich 60°, insbesondere etwa 30°, beträgt.

9. Bodenbearbeitungsmaschine nach einem der Ansprüche 1 bis 8,
**dadurch gekennzeichnet,**
**daß** jeweils vier Zinken (18) in einer vertikalen Ebene an einem Achskörper (17) angeordnet sind.

10. Bodenbearbeitungsmaschine nach einem der Ansprüche 1 bis 9,
**dadurch gekennzeichnet,**
**daß** die Wippen (10) durch ein Drehmoment derart beaufschlagt sind, daß die Vorderenden der Wippen (10) bzw. die vordere Zinkenwalze (11) eine Aufhebetendenz und die Hinterenden der Wippen (10) bzw. die hintere Zinkenwalze (12) eine Absenktendenz besitzen, wobei zur Erzeugung des Drehmoments jeder Wippe (10) vorzugsweise eine Feder (13) zugeordnet ist oder Gewichte bzw. hebelartige schwere Stangen (14) an den Wippen angeordnet sind.

11. Bodenbearbeitungsmaschine nach einem der Ansprüche 1 bis 10,
**dadurch gekennzeichnet,**
**daß** die Wippen (10) höhenverstellbar an dem Rahmen angeordnet sind, wobei zur höhenverstellbaren Halterung vorzugsweise wenigestens einer Wippe (10) an dem Rahmen ein an seinem einen Ende mit dem Rahmen und an seinem anderen Ende mit der Wippe (10) in einer vertikalen Ebene schwenkbar verbundener Winkelhebel (7) vorgesehen ist und der Schwenkbereich des freien Endes des Winkelhebels (7) zumindest nach unten hin durch ein Begrenzungselement (8) einstellbar ist oder wenigstens eine Wippe (10) in vertikaler Richtung verstellbar an dem Rahmen geführt und in unterschiedlichen Höhen arretierbar ist.

12. Bodenbearbeitungsmaschine nach einem der vorhergehenden Ansprüche,
**dadurch gekennzeichnet,**
**daß** unmittelbar vor und/oder hinter den Zinkenwalzen (11,12) Grubber (16), Lockerungszinken oder ähnliche Werkzeuge angeordnet sind, die erfaßte Erde vom Unterboden abschälen und zu einem größeren Anteil nach vorne und oben werfen, wobei insbesondere Vorscharwerkzeuge (16a) mit einer senkrechten Platte, die zur gleichmäßigen Teilung des Bodens sowie als Steinsicherung dient, vorgesehen sind.

13. Bodenbearbeitungsmaschine nach einem der Ansprüche 1 bis 12,
**dadurch gekennzeichnet,**
**daß** hinter den Zinkenwalzen (11,12) Grubber (16) angeordnet lsind und hinter den Grubbern (16) V-förmige Leitwerkzeuge, insbesondere Leitbleche (21), zwischen den hinteren Grubberzinken zur Schließung der durch die Grubber (16) erzeugten Rillen im Boden vorgesehen sind.

14. Bodenbearbeitungsmaschine nach einem der vorhergehenden Ansprüche,
**dadurch gekennzeichnet,**
**daß** der Rahmen an das Zugfahrzeug anhängbar ist oder der Rahmen mit der Vorderseite des Zugfahrzeugs verbindbar ist, um vor dem Zugfahrzeug hergeschoben zu werden.

## Claims

1. An agricultural ground working machine comprising a frame which can be coupled with a tractor vehicle and comprising at least two tine rolls (11, 12) which are arranged behind one another in the direction of travel, which are aligned transversely to the direction of travel, which rotate passively, work by tine engagement in the soil and are rotatably mounted in an intermeshing manner on rockers (10) which are in turn pivotably mounted at the frame about an axis extending transversely to the direction of travel such that, on the pivoting of a rocker (10), one of the respective tine rolls is moved upwardly and one tine roll is moved downwardly, **characterised in that** the bearings of the tine rolls (11, 12) on the rockers (10) allow tumbling movements of the tine rolls such that the rocker on one machine side can pivot in one direction and the rocker on the other machine side can move in the opposite direction and the tine rolls can cross with respect to one another in a view in the direction of travel.

2. A ground working machine in accordance with claim 1,
**characterised in that** the tine rolls (11, 12) have an axle body (17) and a plurality of tines (18) secured to the outer surface of the axle body (17) whose longitudinal axes extend outside the periphery of the axle body (17) and whose free ends are disposed in a manner trailing the respective securing position at the axle body (17) in the rotational direction of the tine roll (11, 12) pre-determined by the direction of travel.

3. A ground working machine in accordance with claim 2,
**characterised in that** at least one of the axle bodies (17) is made substantially cylindrical and the tines (18) are disposed tangentially to the outer surface of the axle body (17).

4. A ground working machine in accordance with claim 2,
**characterised in that** the cross-section of at least one of the axle bodies (17) has the form of a polygon, in particular of a square, and the tines (18) areally contact the side areas of the axle body (17).

5. A ground working machine in accordance with claim 2 or claim 3, **characterised in that** the tines (18) of a tine roll (11, 12), which are substantially disposed in a vertical plane, form a closed frame or are connected to form a closed frame.

6. A ground working machine in accordance with claim 5,
**characterised in that** the end surface of the tine (18) formed at the end of each tine (18) remote from the free end contacts the surface of a following tine (18) facing the axle body (17) and is connected, preferably welded, to this surface of the tine (18).

7. A ground working machine in accordance with any one of claims 1 to 6, **characterised in that** the tines (18) have a square cross-section and contact, at a side surface, the outer surface of the respective axle body (17).

8. A ground working machine in accordance with any one of claims 1 to 7, **characterised in that** the tines (18) run to a point at their free ends, with the point lying on the outer surface of the tines (18) remote from the axle body (17) and the point angle preferably being smaller than or equal to 60°, in particular amounting to 30°.

9. A ground working machine in accordance with any one of claims 1 to 8, **characterised in that** four tines (18) are in each case arranged in a vertical plane on an axle body (17).

10. A ground working machine in accordance with any one of claims 1 to 9, **characterised in that** the rockers (10) are loaded by a torque such that the front ends of the rockers (10), i.e. the front tine roll (11), have a lifting tendency and the rear ends of the rockers (10), i.e. the rear tine roll (12), have a lowering tendency, with a spring (13) preferably being associated with each rocker (10), or weights or lever-like heavy bars (14) being arranged at the rockers, to generate the torque.

11. A ground working machine in accordance with any one of claims 1 to 10, **characterised in that** the rockers (10) are arranged in a vertically adjustable manner at the frame, with a cranked lever (7) being provided for the vertically adjustable holding of preferably at least one rocker (10) at the frame, said cranked lever (7) being connected pivotably in a vertical plane to the frame at its one end and to the rocker (10) at its other end, with the pivot region of the free end of the cranked lever (7) being at least downwardly adjustable by a limiting element (8) or with at least one rocker (10) being adjustably guided at the frame in a vertical direction and being lockable at different heights.

12. A ground working machine in accordance with any one of the preceding claims, **characterised in that** cultivators (16), ground loosening tines or similar tools are arranged directly in front of and/or behind the tine rolls (11, 12) and peel the earth taken up from the subsoil and throw a large portion of it forwardly and upwardly, with in particular pre-share tools (16a) being provided which have a perpendicular plate which serves for the uniform separation of the soil and as a protection against stones.

13. A ground working machine in accordance with any one of claims 1 to 12, **characterised in that** grubbers (16) are arranged behind the tine rollers (11, 12) and V-shaped guide tools, in particular metal guide plates (21), are provided behind the grubbers (16) between the rear grubber tines in order to close the grooves in the soil produced by the grubbers (16).

14. A ground working machine in accordance with any one of the preceding claims, **characterised in that** the frame can be hitched to the tractor vehicle or the frame can be connected to the front side of the tractor vehicle to be pushed in front of the tractor vehicle.

## Revendications

1. Machine agricole pour le travail du sol, comprenant un châssis susceptible d'être accouplé à un véhicule tracteur et au moins deux tambours dentés (11, 12) agencés l'un derrière l'autre en direction de circulation, orientés perpendiculairement à la direction de circulation, en rotation passive et fonctionnant par engagement de leurs dents dans le sol, lesdits tambours étant montés en rotation sur des bascules (10) de manière à engrener l'un avec l'autre, lesdites bascules étant pour leur part agencées sur le châssis avec faculté de basculement autour d'un axe perpendiculaire à la direction de circulation, de sorte que lors du pivotement d'une bascule (10) l'un des tambours dentés respectif est déplacé vers le haut et l'autre tambour denté est déplacé vers le bas,
**caractérisée en ce que**
les paliers des tambours dentés (11, 12) sur les bascules (10) permettent des déplacements oscillatoires des tambours dentés de telle sorte que la bascule sur un côté de la machine est capable de pivoter dans une direction et la bascule sur l'autre côté de la machine est capable de pivoter dans la direction opposée, et les tambours dentés sont capables de s'emboîter l'un par rapport à l'autre, lorsqu'on les voit en direction de circulation.

2. Machine agricole pour le travail du sol selon la revendication 1,
**caractérisée en ce que**
les tambours dentés (11, 12) comportent un corps formant axe (17) et une pluralité de dents (18) fixées sur la surface extérieure du corps formant axe (17), les axes longitudinaux desdites dents s'étendant à l'extérieur de la périphérie du corps formant axe (17) et leurs extrémités libres sont disposées en arrière de l'emplacement de fixation respectif sur le corps formant axe (17), considérées dans la direction de rotation des tambours dentés (11, 12) imposée par la direction de circulation.

3. Machine agricole pour le travail du sol selon la revendication 2,
**caractérisée en ce que**
l'un au moins des corps formant axe (17) est réalisé de manière sensiblement cylindrique, et les dents (18) sont posées tangentiellement par rapport à la surface extérieure du corps formant axe (17).

4. Machine agricole pour le travail du sol selon la revendication 2,
**caractérisée en ce que**
la section de l'un au moins des corps formant axe (17) a la forme d'un polygone, en particulier d'un carré, et **en ce que** les dents (18) sont disposées à plat contre les faces latérales du corps formant axe (17).

5. Machine agricole pour le travail du sol selon l'une ou l'autre des revendications 2 et 3, **caractérisée en ce que**
les dents (18) d'un tambour denté (11, 12), qui sont sensiblement disposées dans un plan vertical, forment un cadre fermé, ou bien sont reliées de façon à former un cadre fermé.

6. Machine agricole pour le travail du sol selon la revendication 5,
**caractérisée en ce que**
la face frontale d'une dent (18), réalisée à l'extrémité de chaque dent (18) détournée de son extrémité libre, est appliquée contre la surface d'une dent (18) successive tournée vers le corps formant axe (17), et **en ce qu'**elle est reliée à cette surface de la dent (18), de préférence soudée.

7. Machine agricole pour le travail du sol selon l'une des revendications 1 à 6, **caractérisée en ce que**
les dents présentent une section quadratique et sont appliquées par une face extérieure contre la surface extérieure du corps formant axe (17) respectif.

8. Machine agricole pour le travail du sol selon l'une des revendications 1 à 7, **caractérisée en ce que**
les dents (18) se terminent sous forme pointue à leurs extrémités libres, la pointe étant disposée sur la surface extérieure des dents (18) éloignée du corps formant axe (17), et **en ce que** l'angle de la pointe est inférieur ou égal à 60°, et s'élève en particulier à environ 30°.

9. Machine agricole pour le travail du sol selon l'une des revendications 1 à 8, **caractérisée en ce que**
quatre dents (18) sont agencées à chaque fois dans un plan vertical sur le corps formant axe (17).

10. Machine agricole pour le travail du sol selon l'une des revendications 1 à 9, **caractérisée en ce que**
les bascules (10) sont sollicitées par un couple de rotation tel que les extrémités antérieures des bascules (10), ou respectivement le tambour denté antérieur (11), présente(nt) une tendance au soulèvement et les extrémités postérieures des bascules (10), ou respectivement le tambour denté postérieur (12), présente(nt) une tendance à la descente, et **en ce que** pour engendrer le couple de rotation un ressort (13) est de préférence associé à chaque bascule (10), ou des poids ou encore des barres lourdes analogues à des leviers (14) sont agencé(e)s sur les bascules.

11. Machine agricole pour le travail du sol selon l'une des revendications 1 à 10, **caractérisée en ce que**
les bascules (10) sont agencées avec faculté de réglage en hauteur sur le châssis, de sorte que l'on prévoit pour le montage réglable en hauteur de préférence d'au moins une bascule (10) sur le châssis, un levier coudé (7) relié à l'une de ses extrémités au châssis et à son autre extrémité à la bascule (10), ledit levier étant capable de pivoter dans un plan vertical, et **en ce que** la zone de pivotement de l'extrémité libre du levier coudé (7) est réglable au moins en direction du bas à l'aide d'un élément de limitation (8), **en ce que** l'une au moins des bascules (10) est guidée en déplacement sur le châssis en direction verticale et susceptible d'être arrêtée à des hauteurs différentes.

12. Machine agricole pour le travail du sol selon l'une des revendications précédentes, **caractérisée en ce que**
immédiatement devant et/ou derrière les tambours dentés (11, 12) sont agencées des dents oscillantes (16), des dents d'ameublissement, ou des outils analogues, qui séparent la terre par rapport au sous-sol et la rejettent en majeure partie vers l'avant et vers le haut, et **en ce que** l'on prévoit en particulier des outils de rasette (16a) avec une plaque verticale qui sert à répartir régulièrement le sol et à une protection vis-à-vis des pierres.

13. Machine agricole pour le travail du sol selon l'une des revendications 1 à 12, **caractérisée en ce que**
derrière les tambours dentés (11, 12) sont agencées des dents oscillantes (16), et **en ce qu'**il est prévu derrière les dents oscillantes (16) des outils de guidage en forme de V, en particulier des tôles de guidage (21) entre les dents oscillantes postérieures afin de refermer le sillon produit dans le sol par les dents oscillantes (16).

14. Machine agricole pour le travail du sol selon l'une des revendications précédentes, **caractérisée en ce que**
le châssis est susceptible d'être attelé au véhicule tracteur, ou **en ce que** le châssis est susceptible d'être relié au côté avant du véhicule tracteur afin d'être poussé par le véhicule tracteur.
